# FASCICULE DE BREVET EUROPEEN

(11) **EP 2 576 752 B1**
(45) Date de publication et mention de la délivrance du brevet: **12.07.2017**
(21) Numéro de dépôt: 11727273.2
(22) Date de dépôt: 27.05.2011
(51) Int. Cl.: C08F 220/34, C11D 3/37, C11D 3/00

(54) **AGENT EPAISSISSANT CONTENANT UN POLYMERE CATIONIQUE ET COMPOSITION ASSOUPLISSANTE CONTENANT LEDIT AGENT EPAISSISSANT, EN PARTICULIER POUR LE TEXTILE**
VERDICKER MIT EINEM KATIONISCHEN POLYMER UND WEICHMACHERZUSAMMENSETZUNG MIT DEM VERDICKER, IM BESONDEREN FÜR TEXTILIEN
THICKENER CONTAINING A CATIONIC POLYMER AND SOFTENING COMPOSITION CONTAINING SAID THICKENER, IN PARTICULAR FOR TEXTILES

(30) Priorité: 27.05.2010 FR 1054095
(43) Date de publication de la demande: 10.04.2013
(73) Titulaire: S.P.C.M. SA, 42160 Andrézieux Bouthéon (FR)
(72) Inventeur: BLONDEL, Frédéric, F-42600 Lezigneux (FR)
(74) Mandataire: Cabinet Laurent & Charras
(86) Numéro de dépôt international: PCT/FR2011/051208
(87) Numéro de publication internationale: WO 2011/148110

(56) Documents cités:
- EP-A1- 1 449 862
- EP-A2- 1 099 749
- WO-A1-97/22640
- WO-A1-2005/087188
- US-A- 4 454 060
- US-A1- 2004 052 746

## Description

### DOMAINE TECHNIQUE DE L'INVENTION

La présente invention concerne une composition assouplissante pour le linge contenant un agent épaississant/stabilisant. Il s'agit d'un polymère cationique obtenu par polymérisation de monomères cationiques et de monomères à caractère hydrophobe.

L'utilisation de tels agents épaississants dans des compositions assouplissantes permet d'améliorer leur profil rhéologique et donc de modifier les propriétés de la formulation assouplissante. Par ailleurs, le rôle de l'agent assouplissant réside dans l'apport d'un toucher beaucoup plus agréable par lubrification des fibres textiles animales (laine en particulier) et végétales (coton) et des fibres synthétiques après traitement. Il apporte aussi des propriétés antistatiques en réduisant la friction entre les fibres, il procure des sensations de fraîcheur grâce aux parfums incorporés, et il permet de révéler les couleurs et de faciliter le repassage.

Dans la suite de la description et dans les revendications, par l'expression « agent épaississant », on entend indifféremment agent épaississant et/ou stabilisant.

### ETAT ANTERIEUR DE LA TECHNIQUE

Le document WO 90/12862 décrit une composition assouplissante comprenant un polymère cationique agissant en tant qu'épaississant. Ce polymère est très faiblement réticulé en présence de 5 à 45 ppm d'un agent réticulant comportant des fonctions polyéthyléniques.

Le document US 6,864,223 décrit une composition assouplissante contenant le même type de polymères mais plus réticulés (70-300 ppm) et associés à un agent assouplissant de type ester quaternisé et à un parfum.

La publication Research Disclosure n° 429116, datée de janvier 2000, concerne la préparation de polymères cationiques en émulsions inverses et leur utilisation comme épaississants dans diverses compositions, comme par exemple pour des assouplissants textiles.
Le document WO 2005/053748 du Demandeur décrit des polymères cationiques fortement réticulés (>300ppm), utilisés comme épaississants de compositions aqueuses. La demande de brevet PCT/EP2009/050077, toujours du Demandeur, décrit des polymères cationiques, sous forme d'émulsion inverse, très fortement réticulés et ayant un taux d'insoluble maximum de 15%. Ces polymères sont utilisables dans des compositions assouplissantes.

Le document WO97/36981 décrit des compositions assouplissantes stables et visqueuses en associant un épaississant acrylique, tel que décrit dans le document WO 90/12862, et un polymère associatif de type surfactant ethoxy / propoxy (EO/PO).

Les documents EP 0 172 723 et EP 0 172 724 décrivent des compositions de polymères et un procédé de polymérisation en émulsion inverse pour préparer des polymères linéaires ou réticulés, anioniques ou cationiques contenant des groupes hydrophobes ayant plus de 8 atomes de carbone.

Le document US 2004/052746 décrit notamment une composition assouplissante comprenant un polymère obtenu par polymérisation des quatre monomères suivants :
- un monomère vinylique présentant un groupement amine cationique ou neutre ;
- un monomère vinylique non ionique et hydrophobe ;
- un monomère vinylique associatif ; et
- un monomère surfactant vinylique semi-hydrophobique.
En outre, il est précisé que la présence du monomère surfactant vinylique semi-hydrophobique est essentielle à la stabilité des émulsions comprenant ce copolymère.

Le document EP 1 099 749 décrit une composition assouplissante comprenant un copolymère neutre obtenu par polymérisation de :
- un monomère à base d'acide acrylique ou d'acide méthacrylique ;
- un monomère vinylique ; et
- un monomère associatif.

Le document WO 2005/087188 décrit une substance antiadhésive pour des préparations cosmétiques comprenant le terpolymère neutre obtenu notamment par polymérisation de :
- méthacrylate de diméthylaminoéthyle ;
- éthylacrylate ; et
- béhéneth-25-méthacrylate.

Le document WO 97/22640 décrit un agent moussant comprenant un terpolymère obtenu par polymérisation de :
- un monomère cationique (DADMAC) ;
- un monomère vinylique comprenant un groupement amide ; et
- un monomère vinylique présentant un groupement hydrophobe ainsi qu'un groupement hydrophile.

Le document US 4,454,060 décrit une composition liquide détergente comprenant un copolymère pouvant être préparé à partir de :
- un monomère à base d'acrylamide ;
- un monomère cationique ; et
- un monomère comprenant un groupement hydrophobe.

Le document EP 1 449 862 décrit l'utilisation d'un polymère cationique en tant qu'épaississant dans une composition cosmétique ou pharmaceutique, de pâte d'impression pour l'industrie textile, de détergent industriel ou ménager ou bien dans l'industrie pétrolifère. Ledit polymère comprend un monomère cationique, un monomère neutre et un monomère tensio-actif non ionique.

Il est toutefois à noter que les documents WO 2005/087188, WO 97/22640, US 4,454,060, et EP 1 449 862 ne concernent donc pas des compositions assouplissantes.

Bien que les agents épaississants utilisés dans les compositions d'assouplissants textiles décrites dans l'art antérieur permettent certainement d'épaissir les compositions, il existe toutefois un besoin de mieux maîtriser le profil rhéologique de la formulation et d'obtenir une stabilité accrue de la composition.

En effet, les paramètres influençant la viscosité d'une telle composition sont très nombreux :
- concentrations variables en agent assouplissant (forme diluée à concentrée) ;
- procédés de mise en oeuvre complexes (agitation, température, batch ou continu,...) ;
- spécificités régionales nombreuses (Amérique du Sud, Asie, Europe, Amérique du Nord).

Il est également nécessaire d'améliorer la compatibilité entre les polymères épaississants et les agents assouplissants et donc la stabilité de la composition.

Le document WO 2008/036587 décrit une composition antiperspirante comprenant un polymère cationique hydrophobe modifié. Ce polymère peut être obtenu par polymérisation des quatre monomères suivants :
- un monomère vinylique ;
- un monomère vinylique non ionique hydrophobe ;
- un monomère vinylique associatif et
- un monomère vinylique surfactant semi-hydrophobe.

La présente invention se propose de résoudre notamment les problèmes techniques suivants :
- amélioration de la stabilité des compositions assouplissantes ;
- augmentation du pouvoir épaississant des polymères dans les compositions assouplissantes, permettant ainsi de réduire de manière significative le dosage de polymère ;
- amélioration du profil rhéologique quelle que soit la concentration d'agent assouplissant.

### EXPOSE DE L'INVENTION

Selon la présente invention, il a été découvert que de manière surprenante, la sélection de monomères hydrophobes spécifiques pour la préparation d'un polymère cationique permettait d'améliorer le profil rhéologique et la stabilité des compositions assouplissantes par rapport aux polymères de l'art antérieur.

En outre, ces polymères sont plus compatibles avec les autres ingrédients contenus dans les compositions assouplissantes et notamment les agents assouplissants de type esters quaternisés.

Enfin, l'utilisation de ce type de polymère permet de réduire de manière significative le dosage de polymère dans la composition assouplissante.

Sans émettre une quelconque théorie, le Demandeur explique ces améliorations : une meilleure affinité entre les parties hydrophobes des polymères cationiques (interactions polymère / substrat) et celles des agents assouplissants, et une interaction entre les parties hydrophobes des polymères eux-mêmes (interactions polymère / polymère).

Plus précisément, la présente invention concerne une composition assouplissante pour le textile comprenant :
- au moins un agent assouplissant cationique non soluble dans l'eau muni d'une partie hydrophile et d'une partie hydrophobe ; et
- au moins un agent épaississant contenant un terpolymère cationique obtenu par polymérisation :
   - d'un monomère cationique ;
   - d'un monomère à caractère hydrophobe de formule (I) ; 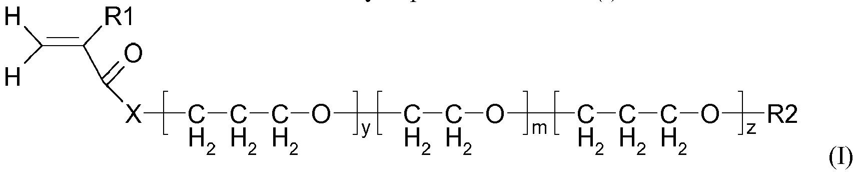 où
      R1 = H ou CH₃
      R2 = chaîne alkyle possédant au moins 16 atomes de carbone
      X = O, m ≥ 5, y = z = 0, ou
      X = NH, m ≥ z ≥ 5, y = 0, ou
      X = NH, m ≥ y ≥ 5, z = 0,
   - d'un monomère non ionique.

Une chaîne alkyle est une chaîne d'hydrocarbure, saturée et acyclique, linéaire ou branchée de formule générale CₙH₂ₙ₊₁.

Selon un mode de réalisation avantageux, l'agent épaississant est constitué dudit terpolymère cationique.

Selon l'invention, le polymère cationique peut être réticulé ou non. Lorsque ce dernier est réticulé, la réticulation est effectuée en présence ou non d'un agent de transfert afin de contrôler le poids moléculaire.

Les monomères cationiques sont avantageusement choisis dans le groupe comprenant les sels de diallyldialkyl ammonium comme le chlorure de diallyl diméthyl ammonium (DADMAC) ; les sels acidifiés ou quaternisés d'acrylates et méthacrylates de dialkylaminoalkyle, en particulier d'acrylate de dialkylaminoéthyle (ADAME) et de méthacrylate de dialkylaminoéthyle (MADAME) ; les sels acidifiés ou quaternisés de dialkyl-aminoalkylacrylamides ou méthacrylamides, comme par exemple le méthacrylamido-propyl triméthyl ammonium chlorure (MAPTAC), l'acrylamido-propyl triméthyl ammonium chlorure (APTAC) et les produits de Mannich comme les dialkylaminométhylacrylamides quaternisés.
Les sels acidifiés sont obtenus par les moyens connus de l'homme de métier, et notamment par protonation. Les sels quaternisés sont également obtenus par les moyens connus de l'homme du métier notamment, par réaction avec le chlorure de benzyle, le chlorure de méthyle (MeCI), les chlorures d'aryle, d'alkyle, ou le diméthylsulfate.

De manière avantageuse, la teneur en monomère cationique représente entre 25% massique et 99,9% massique par rapport au poids du polymère cationique, de préférence entre 50 % massique et 99,5% massique.

Les monomères à caractère hydrophobe, ou monomères hydrophobes, sont de formule (I). On citera particulièrement le méthacrylate de cétyle éthoxylé (EO 25) et le méthacrylate de béhényle éthoxylé (EO 25) et leurs mélanges

Plus avantageusement, le monomère hydrophobe est le méthacrylate de béhényle éthoxylé (EO 25).

Le terme EO 25 signifie que le monomère à caractère hydrophobe contient 25 motifs éthoxy CH₂-CH₂-O. En d'autres termes, m = 25 pour le composé selon la formule (I).

Préférentiellement, la teneur en monomère hydrophobe représente entre 0,1% massique et 20 % massique par rapport au poids du polymère cationique, de préférence entre 0,5 % massique et 5 % massique.

Comme déjà indiqué, le polymère cationique contenu dans l'agent épaississant est préparé par polymérisation d'un monomère cationique, d'un monomère à caractère hydrophobe, et d'un monomère non ionique.

Le monomère non ionique est avantageusement choisi dans le groupe comprenant l'acrylamide, le méthacrylamide, le N-vinylméthylacétamide ou le N-vinylformamide, l'acétate de vinyle, la vinylpyrrolidone, le méthacrylate de méthyle ou d'autres esters acryliques, ou d'autres esters à insaturation éthylénique, ou encore d'autres monomères vinyliques insolubles dans l'eau comme le styrène ou l'acrylonitrile.

Avantageusement, la teneur en monomère non ionique représente entre 0 et 74,9 % massique par rapport au poids du polymère cationique, plus avantageusement, entre 0 et 30 % massique.

Dans un mode de réalisation particulier, le polymère cationique contenu dans l'agent épaississant peut être obtenu par polymérisation :
- de méthacrylate de diméthylaminoéthyle chlorométhylé ;
- d'acrylamide ; et
- de méthacrylate de béhényle éthoxylé (EO 25).

Dans un autre mode de réalisation particulier, le polymère cationique contenu dans l'agent épaississant peut être obtenu par polymérisation :
- de méthacrylate de diméthylaminoéthyle chlorométhylé ;
- d'acrylamide ; et
- de méthacrylate de cétyle éthoxylé (EO 25).

Comme déjà dit, le polymère cationique peut être réticulé en présence d'un agent réticulant et éventuellement en présence d'un agent de transfert.
L'agent réticulant est avantageusement choisi dans le groupe comprenant : le méthylène bisacrylamide (MBA), l'éthylène glycol di-acrylate, le polyéthylène glycol diméthacrylate, le diacrylamide, le cyanométhylacrylate, le vinyloxyéthylacrylate ou méthacrylate, la triallylamine, le formaldéhyde, le glyoxal, les composés de type glycidyléther comme l'éthylèneglycol diglycidyléther, des époxy, ou un mélange de ces composés.

De manière avantageuse, la teneur en agent réticulant représente entre 0 et 10 % massique par rapport au poids du polymère cationique, de préférence entre 0 et 5 % massique.

L'agent de transfert, lorsqu'il est présent, est choisi dans le groupe comprenant : alcool isopropylique, hypophosphite de sodium, mercaptoéthanol ou un mélange de ces composés.

De manière avantageuse, la teneur en agent de transfert représente entre 0 et 5 % massique par rapport au poids du polymère cationique, de préférence entre 0 et 2 % massique.

Le polymère cationique constitutif de l'agent épaississant peut se présenter sous forme liquide ou solide. Il peut être préparé par polymérisation en dispersion, par polymérisation en émulsion inverse, par polymérisation en microémulsion, par polymérisation gel ; le polymère obtenu pouvant être ensuite séché et isolé pour disposer d'une poudre.

Dans un mode de réalisation particulier, le polymère cationique se présente sous forme d'une émulsion inverse comprenant une phase huile, une phase aqueuse, au moins un agent émulsifiant de type eau dans huile (E/H), au moins un agent émulsifiant de type huile dans eau (H/E). L'émulsion inverse comprend généralement de 20% à 60% en poids, et de préférence de 40% à 55% en poids, de polymère cationique, linéaire, branché ou réticulé.

Par agent émulsifiant du type eau dans huile, on entend des agents émulsifiants possédant une valeur HLB suffisamment faible pour fournir des émulsions eau dans huile tels que les polymères tensioactifs commercialisés sous le nom de HYPERMER® ou tels que les extraits de sorbitan, comme le monooléate de sorbitan, ou l'isostéarate de sorbitan.

Par agent émulsifiant du type huile dans eau, on entend des agents émulsifiants possédant une valeur HLB suffisamment élevée pour fournir des émulsions huile dans l'eau tels que les esters de sorbitan éthoxylés comme l'oléate de sorbitan éthoxylé avec 20 équivalents d'oxyde d'éthylène (EO 20).

Dans le mode de réalisation particulier que constitue l'émulsion inverse, telle que décrite précédemment, la copolymérisation des monomères précurseurs est effectuée à un pH supérieur à 4 et de préférence compris entre 4 et 6.

L'émulsion inverse contient généralement de 1% à 10% en poids, et de préférence de 2,5% à 9% en poids, d'agents émulsifiants du type eau dans huile (E/H) et de 2% à 10% en poids, et de préférence de 2,5% à 6% en poids d'agents émulsifiants du type huile dans eau (H/E).

L'émulsion inverse contient une phase huile représentant de 15% à 40%, de préférence de 20% à 25%, de son poids total.

Cette phase huile peut être soit une huile minérale commerciale contenant des hydrocarbures saturés de type paraffinique, isoparaffinique, cycloparaffinique, présentant à température ambiante, une densité entre 0,7 et 0,9, soit une huile végétale, soit une huile de synthèse, soit un mélange de plusieurs de ces huiles.

L'émulsion inverse contient entre 2 % et 40 % d'eau. Elle peut également contenir divers additifs tels que des agents complexants, des agents de transfert, ou des agents limiteurs de chaîne.

Le procédé de préparation de l'émulsion inverse telle que définie précédemment, est réalisé selon les étapes suivantes :
a) on émulsionne une solution aqueuse contenant les monomères et les éventuels additifs, dans une phase huile en présence d'un ou plusieurs agents émulsifiants de type eau dans huile,
b) on amorce la réaction de polymérisation par introduction dans l'émulsion formée en a), d'un système d'initiateurs de radicaux libres puis on laisse la réaction se dérouler,
c) lorsque la réaction de polymérisation est terminée, on introduit un ou plusieurs agents émulsifiants de type huile dans eau à une température inférieure à 50°C.

Selon une variante de ce procédé, le milieu réactionnel issu de l'étape b), est concentré par distillation, avant la mise en oeuvre de l'étape c).

Selon une autre variante de ce procédé, le milieu réactionnel issu de l'étape b), est complètement séché. Dans ce cas, l'étape c) n'est pas réalisée.

Selon une autre mise en oeuvre préférée du procédé, le pH de la solution aqueuse de départ est ajusté à un pH supérieur ou égal à 4 avant la mise en oeuvre de l'étape c).

Comme déjà dit, il est également possible de concentrer ou d'isoler le polymère cationique contenu dans l'agent épaississant par toutes les techniques connues de l'homme du métier. II existe en particulier de nombreux procédés d'obtention de poudre à partir d'émulsions inverses de polymères qui consistent à isoler la matière active des autres constituants de l'émulsion comme par exemple :
- la précipitation dans un milieu non solvant tel que l'acétone, le méthanol ou tout autre solvant polaire dans lequel le polymère cationique n'est pas soluble. Une simple filtration permet alors d'isoler la particule de polymère.
- la distillation azéotropique en présence d'agent agglomérant et de polymère stabilisant permet de conduire à des agglomérats que l'on isole facilement par filtration avant de procéder au séchage de la particule.
- le "spray-drying" ou séchage par atomisation consiste à créer un nuage de fines gouttelettes d'émulsions dans un courant d'air chaud, pendant une durée contrôlée.

Les polymères mis en oeuvre dans l'invention, obtenus sous forme de poudre par l'une quelconque des techniques décrites ci-dessus, ont pour principal avantage d'être proposés sans solvant. Ils seront donc tout particulièrement adaptés aux compositions présentant une sensibilité importante aux problèmes d'odeurs résiduelles, de réglementation et/ou de profil toxicologique.

Le Demandeur a découvert de manière surprenante que l'utilisation de ces polymères spécifiques permet d'améliorer significativement la compatibilité avec les agents assouplissants à chaînon hydrophobe. Elle permet également de mieux stabiliser ces compositions assouplissantes, notamment en pH acide et dans les systèmes dispersés, et de développer des profils de viscosité jusque là difficilement envisageables.

La sélection de certains monomères hydrophobes selon la formule (I) et leur polymérisation avec les monomères cationiques est à l'origine de ces propriétés inattendues.
La présente invention a donc pour objet une composition assouplissante comprenant au moins un agent épaississant tel que précédemment décrit ainsi qu'au moins un agent assouplissant.

Comme déjà indiqué, la présente invention concerne une composition assouplissante comprenant au moins un agent épaississant contenant un polymère cationique, et plus précisément un terpolymère cationique, obtenu par polymérisation :
- d'un monomère cationique ;
- d'un monomère à caractère hydrophobe de formule (I) ; 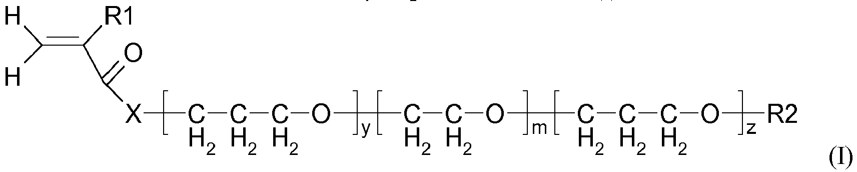 où
   R1 = H ou CH₃
   R2 = chaîne alkyle possédant au moins 16 atomes de carbone
   X = O, m ≥ 5, y = z = 0, ou
   X = NH, m ≥ z ≥ 5, y = 0, ou
   X = NH, m ≥ y ≥ 5, z = 0,
- d'un monomère non ionique.

Selon un autre mode de réalisation préféré, la présente invention concerne une composition assouplissante comprenant au moins un agent épaississant constitué d'un terpolymère cationique obtenu par polymérisation :
- d'un monomère cationique ;
- d'un monomère à caractère hydrophobe de formule (I) ; 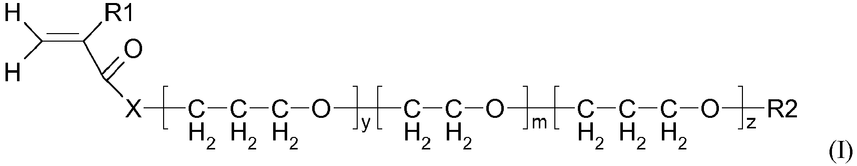 où
   R1 = H ou CH₃
   R2 = chaîne alkyle possédant au moins 16 atomes de carbone
   X = O, m ≥ 5, y = z = 0, ou
   X = NH, m ≥ z ≥ 5, y = 0, ou
   X = NH, m ≥ y ≥ 5, z = 0,
- d'un monomère non ionique.

Les compositions assouplissantes, dans lesquelles les polymères sont introduits, sont utilisées pendant ou après le lavage de matières textiles. Elles sont appliquées pendant le lavage, généralement au stade du cycle de rinçage où on les ajoute à l'eau de rinçage, ou pendant le cycle de séchage où on les utilise à sec par exemple comme agent d'imprégnation sur une bande d'étoffe tissée ou non tissée.

De manière avantageuse, la teneur en agent épaississant dans la composition assouplissante représente 0,05 % à 10 % par rapport au poids de la composition assouplissante ou, de préférence, 0,1 à 5 %.

Les compositions assouplissantes des matières textiles sont des compositions aqueuses contenant des agents assouplissants de type ester quaternisé. Ces molécules sont non solubles dans l'eau. Elles présentent un caractère cationique. Elles sont munies d'une partie hydrophile pour l'affinité avec le substrat textile, les fibres cellulosiques, et d'une partie hydrophobe (une longue chaîne alkyle) qui apporte la fonction assouplissante par lubrification.

Comme agent assouplissant, on peut utiliser toute substance cationique qui est substantive au rinçage à l'eau sur le textile et qui est capable de communiquer au textile de la souplesse. Un grand nombre de ces substances sont connues et comprennent des composés quaternaires comme suit :
(i) des composés d'alkyl-méthylammonium quaternaire présentant soit une chaîne alkyle en C18 à C24 soit deux chaînes alkyle en C12 à C30, les groupes alkyle à longue chaîne étant le plus communément dérivés du suif hydrogéné. Des exemples de ces composés sont le chlorure de disuif-diméthylammonium, le méthylsulfate de disuif-diméthylammonium, le chlorure de suif-triméthylammonium, le chlorure de diéicosyldiméthylammonium, le chlorure de suifdiméthyl-(3-suifalcoxypropyl)-ammonium, le chlorure de ditétradécyldiméthylammonium, l'acétate de didodécyl-diéthylammonium et l'acétate de suif-triméthylammonium,
(ii) des composés d'ammonium quaternaire amido-alcoxylés. On peut préparer des composés quaternaires de ce type en partant d'acides gras ou de triglycérides et d'une amine, par exemple la diéthylènetriamine. On alcoxyle alors le produit avec de l'oxyde d'éthylène ou de l'oxyde de propylène et on le quaternise par le sulfate de diméthyle.
(iii) des amido-imidazolines quaternisées. On peut obtenir des composés de ce type en chauffant le produit alcoxylé de la réaction d'une amine et d'un acide gras ou d'un triglycéride comme décrit pour le type (ii) pour effectuer la cyclisation donnant l'imidazoline. On quaternise alors celle-ci par réaction, par exemple, sur le sulfate de diméthyle. Un exemple de composé du type (iii) est le méthylsulfate de 2-heptadécyl-1-méthyl-1-(2'-stéaroylamido-éthyl)-imidazolinium.
(iv) des sels de polyamine et des sels de polyalkylèneimine,
(v) des sels d'alkylpyridinium, par exemple le chlorure de cétylpyridinium.

Les agents assouplissants cationiques généralement préférés sont ceux qui contiennent des groupes alkyle gras à longue chaîne dérivés du suif ou du suif hydrogéné et la classe généralement préférée d'assouplissants est celle du type (i), c'est-à-dire les composés d'alkyl-diméthylammonium.

Les compositions peuvent contenir d'autres ingrédients facultatifs, par exemple des émulsifiants pour les polyorganosiloxanes, des parfums, des azurants optiques et des colorants. Des ingrédients facultatifs particulièrement préférés de compositions aqueuses d'assouplissant pour textile sont certains émulsifiants non ioniques, tels que les esters d'acide gras de monoalcools et polyalcools, par exemple le monostéarate de glycérol, le monolaurate de sorbitan et le monooléate de sorbitan. On peut utiliser ces esters dans des proportions classiques pour des compositions assouplissantes, de préférence d'environ 1 à 5 % du poids de la composition aqueuse.

L'homme de métier saura choisir la meilleure combinaison des monomères, agents réticulants et/ou de transfert et des conditions de polymérisation en fonction de ses connaissances propres et de la présente description, ainsi que des exemples suivants.

### EXEMPLES DE REALISATION DE L'INVENTION

### Synthèse et évaluation dans une formulation assouplissante

### A. Synthèse de polymère cationique :

### • Exemple 1 (P1) :

Une phase aqueuse de monomères solubles dans l'eau est préparée en mélangeant les composés suivants :
- 6.0 % massique d'acrylamide à 50%
- 46.8 % massique de méthacrylate de diméthylaminoéthyle chlorométhylé, à 75%
- 1.3 % massique de méthacrylate de béhényle éthoxylé (EO 25)
- 0.03 % massique d'acide diéthylènetriaminepentaacétique, sel de pentasodium
- 0.05 % massique d'hypophosphite de sodium
- 0.02 % massique de méthylène bisacrylamide
- 13.3 % massique d'eau désionisée
- le pH est ajusté entre 4.0 et 6.0 avec de l'acide citrique

Une phase organique est préparée en ajoutant les composés suivants :
- 2.0 % massique de monooléate de sorbitan
- 5.5 % massique d'un polymère amphiphile stabilisant
- 19.0 % massique d'huile minérale blanche
- 6.0 % massique d'huile légère minérale isoparaffinique légère

Les deux phases sont mélangées dans un réacteur agité de 1 L en versant la phase aqueuse dans la phase organique, puis soumis à un intense cisaillement (de type rotor stator) pendant 1 minute pour former une émulsion d'eau dans l'huile. Ensuite cette émulsion est désoxygénée en faisant buller de l'azote pendant 30 minutes.

La polymérisation est effectuée par simple addition d'un couple redox de type métabisulfite de sodium et de tertiobutylhydropéroxide en solution dans l'eau.

Après avoir atteint la température maximum de polymérisation (polymérisation adiabatique) l'émulsion est maintenue 1 h à 65°C.

Une distillation sous vide permet d'enlever l'eau et l'huile légère volatile pour obtenir une concentration finale en polymère d'environ 58%.

La dernière étape consiste à ajouter un tensio-actif de type huile dans eau : A 100 % massique de produits distillés on ajoute 6.0 % massique d'alcool gras éthoxylé (trideceth-6).

### • Contre Exemple 1 (CP1) :

On reproduit le protocole de l'exemple 1 sans méthacrylate de béhényle éthoxylé (EO 25)

### • Exemple 2 (P2) :

On reproduit l'exemple 1 en l'absence d'agent réticulant, le méthylène bis acrylamide

### • Contre exemple 2 (CP2) :

On reproduit l'exemple 1 en l'absence de réticulant et en l'absence de méthacrylate de béhényle éthoxylé (EO 25)

### • Exemple 3 (P3) :

On reproduit l'exemple 1 en remplaçant le méthacrylate de béhényle éthoxylé (EO 25) par le méthacrylate de cétyle éthoxylé (EO 25)

### • Contre exemple 3 (CP3) :

On reproduit l'exemple 1 mais en remplaçant le méthacrylate de béhényle éthoxylé par le méthacrylate de dodécyle éthoxylé (EO 25)

### B. Préparation de formulation assouplissante à base d'esters quaternisés

Dans un réacteur agité (150 rpm), on charge 94.5 % massique d'eau déionisée à 50°C. Ensuite on disperse 5.5 % massique d'esters quaternisés (Stepantex VK-90). Après 15 minutes le mélange est refroidi à température ambiante et le pH est ajusté à 3.5 avec de l'acide citrique.

On procède alors à la mesure de viscosité de la base obtenue avec un viscosimètre Brookfield RVT, 10 rpm, 25 °C. La valeur est de 160 cps.

Ensuite on procède à l'addition sous agitation (350 rpm) de 0.5 % massique de polymère cationique obtenus dans les exemples de la partie A, jusqu'à l'obtention d'une solution homogène.

On procède ensuite à la mesure de viscosité du produit fini obtenu avec un viscosimètre Brookfield RVT, 10 rpm, 25°C.

### Résultats :

| ***Nature de la formulation*** | ***Viscosité apparente* * *Brookfield RVT*, *10 rpm*** | ***Viscosité apparente*** ** ***Brookfield RVT, 10 rpm*** |
|---|---|---|
| Base « seule » | 160 | 120 |
| **Base** + **0.5**% **P 1** | **1250** | **1450** |
| Base + 0.5% CP 1 | 510 | 450 |
| **Base** + **0.5**% **P 2** | **2600** | **2950** |
| Base + 0.5% CP 2 | 300 | 250 |
| **Base** + **0.5**% **P 3** | **1050** | **1250** |
| Base + 0.5% CP 3 | 320 | 280 |
| ***Base*** + ***0***.***5*% *Ciba*®*RHEOVIS*®*FRC*** | 480 | 450 |

| | | |
|---|---|---|
| * : 1 h après l'obtention d'une formulation homogène, mesure effectuée à 25°C. ** : Après 1 mois à l'étuve à 50°C, mesure effectuée à 25°C. | | |

Les exemples selon l'invention (polymères P1, P2 et P3) permettent donc d'augmenter significativement la viscosité d'une composition assouplissante et sa stabilité dans le temps.

## Revendications

1. Composition assouplissante pour le textile comprenant :
• au moins un agent assouplissant cationique non soluble dans l'eau muni d'une partie hydrophile et d'une partie hydrophobe ; et
• au moins un agent épaississant contenant un terpolymère cationique obtenu par polymérisation :
- d'un monomère cationique ;
- d'un monomère à caractère hydrophobe de formule (I) ; 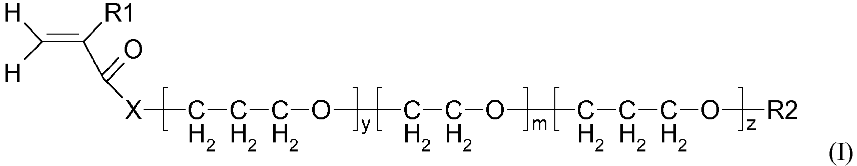 où
R1 = H ou CH₃
R2 = chaîne alkyle possédant au moins 16 atomes de carbone
X = O, m ≥ 5, y = z = 0, ou
X = NH, m ≥ z ≥ 5, y = 0, ou
X = NH, m ≥ y ≥ 5, z = 0,
- d'un monomère non ionique.

2. Composition assouplissante selon la revendication 1, ***caractérisée* en ce que** l'agent épaississant est constitué d'un terpolymère cationique obtenu par polymérisation :
- d'un monomère cationique ;
- d'un monomère à caractère hydrophobe de formule (I) ; 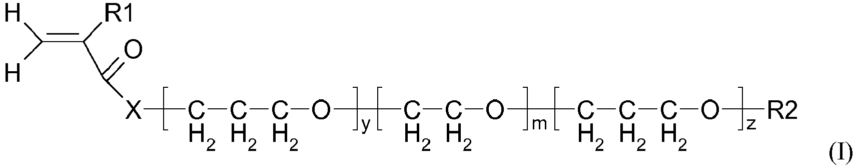 où
R1 = H ou CH₃
R2 = chaîne alkyle possédant au moins 16 atomes de carbone
X = O, m ≥ 5, y = z = 0, ou
X = NH, m ≥ z ≥ 5, y = 0, ou
X = NH, m ≥ y ≥ 5, z = 0,
- d'un monomère non ionique.

3. Composition assouplissante selon la revendication 1, ***caractérisée* en ce que** le monomère hydrophobe est choisi dans le groupe comprenant : le méthacrylate de cétyle éthoxylé (EO 25), le méthacrylate de béhényle éthoxylé (EO 25) ou un mélange de ces composés.

4. Composition assouplissante selon la revendication 1 ***caractérisée* en ce que** le monomère hydrophobe est le méthacrylate de béhényle éthoxylé (EO 25).

5. Composition assouplissante selon la revendication 1 ***caractérisée* en ce que** la teneur en monomère hydrophobe représente entre 0,1% massique et 20 % massique par rapport au poids du polymère cationique, de préférence entre 0,5 % massique et 5 % massique.

6. Composition assouplissante selon la revendication 1 ***caractérisée* en ce que** le monomère cationique est choisi dans le groupe comprenant les sels de diallyldialkyl ammonium comme le chlorure de diallyl diméthyl ammonium (DADMAC) ; les sels acidifiés ou quaternisés d'acrylates et méthacrylates de dialkylaminoalkyle, en particulier d'acrylate de dialkylaminoéthyle (ADAME) et de méthacrylate de dialkylaminoéthyle (MADAME) ; les sels acidifiés ou quaternisés de dialkyl- aminoalkylacrylamides ou méthacrylamides, comme par exemple le méthacrylamido-propyl triméthyl ammonium chlorure (MAPTAC), l'acrylamido-propyl triméthyl ammonium chlorure (APTAC) et les produits de Mannich comme les dialkylaminométhylacrylamides quaternisés.

7. Composition assouplissante selon la revendication 1 ***caractérisée* en ce que** la teneur en monomère cationique représente entre 25% massique et 99,9% massique par rapport au poids du polymère cationique, de préférence entre 50 % massique et 99,5% massique.

8. Composition assouplissante selon la revendication 1 ***caractérisée* en ce que** le polymère cationique est réticulé en présence d'un agent réticulant choisi dans le groupe comprenant le méthylène bisacrylamide (MBA), l'éthylène glycol di-acrylate, le polyéthylène glycol diméthacrylate, le diacrylamide, le cyanométhylacrylate, le vinyloxyéthylacrylate ou méthacrylate, la triallylamine, le formaldéhyde, le glyoxal, les composés de type glycidyléther comme l'éthylèneglycol diglycidyléther, des époxy, ou un mélange de ces composés.

9. Composition assouplissante selon la revendication 8 ***caractérisée* en ce que** le polymère cationique est réticulé en présence d'un agent de transfert choisi dans le groupe comprenant alcool isopropylique, hypophosphite de sodium, mercaptoéthanol ou un mélange de ces composés.

10. Composition assouplissante selon la revendication 1 ***caractérisée* en ce que** le polymère cationique est obtenu par polymérisation en émulsion inverse.

11. Composition assouplissante selon la revendication 1 ***caractérisée* en ce que** le polymère cationique se présente sous forme d'une émulsion inverse comprenant une phase huile, une phase aqueuse, au moins un agent émulsifiant de type eau dans huile (E/H), au moins un agent émulsifiant de type huile dans eau (H/E) et de 20% à 60% en poids, et de préférence de 40% à 55% en poids, dudit polymère cationique.

12. Composition assouplissante selon la revendication 1 ***caractérisée* en ce que** le polymère cationique est obtenu par polymérisation :
- de méthacrylate de diméthylaminoéthyle chlorométhylé ;
- d'acrylamide ; et
- de méthacrylate de béhényle éthoxylé (EO 25).

13. Composition assouplissante selon la revendication 1 ***caractérisée* en ce que** le polymère cationique est obtenu par polymérisation :
- de méthacrylate de diméthylaminoéthyle chlorométhylé ;
- d'acrylamide ; et
- de méthacrylate de cétyle éthoxylé (EO 25).

14. Composition assouplissante selon la revendication 1, ***caractériséee*** en ce que la teneur en agent épaississant représente 0,05 % à 10 % par rapport au poids de la composition assouplissante, de préférence, 0,1 à 5 %.

15. Utilisation dans une composition assouplissante contenant un agent assouplissant cationique non soluble dans l'eau muni d'une partie hydrophile et d'une partie hydrophobe, du terpolymère cationique obtenu par polymérisation :
- d'un monomère cationique ;
- d'un monomère à caractère hydrophobe de formule (I) ; 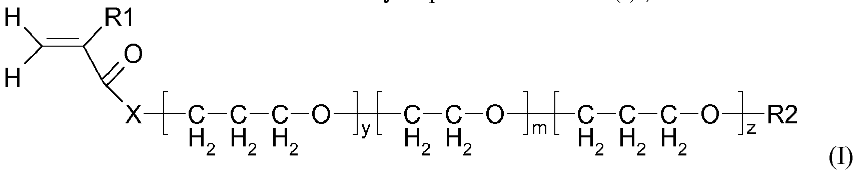 où
R1 = H ou CH₃
R2 = chaîne alkyle possédant au moins 16 atomes de carbone
X = O, m ≥ 5, y = z = 0, ou
X = NH, m ≥ z ≥ 5, y = 0, ou
X = NH, m ≥ y ≥ 5, z = 0,
- d'un monomère non ionique.

## Patentansprüche

1. Weichmacherzusammensetzung für Textilien, umfassend:
• mindestens einen in Wasser unlöslichen kationischen Weichmacher, ausgestattet mit einem hydrophilen Teil und einem hydrophoben Teil; und
• mindestens ein Verdickungsmittel, das ein kationisches Terpolymer enthält, das durch Polymerisation des Folgenden erhalten wird:
- eines kationischen Monomers;
- eines Monomers mit hydrophobem Charakter der Formel (I); 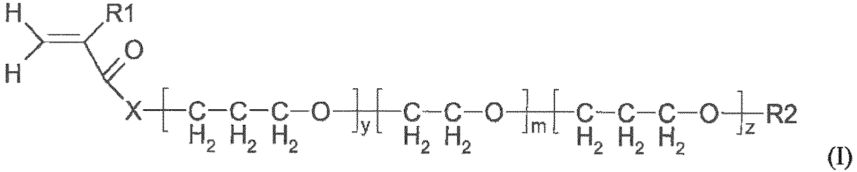 worin
R1 = H oder CH₃
R2 = Alkylkette mit mindestens 16 Kohlenstoffatomen
X = O, m ≥ 5, y = z = 0 oder
X = NH, m ≥ z ≥ 5, y = 0 oder
X = NH, m ≥ y ≥ 5, z = 0
- eines nichtionischen Monomers.

2. Weichmacherzusammensetzung nach Anspruch 1, ***dadurch gekennzeichnet, dass*** die Weichmacherzusammensetzung aus einem kationischen Terpolymer besteht, das durch Polymerisation des Folgenden erhalten wird:
- eines kationischen Monomers;
- eines Monomers mit hydrophobem Charakter der Formel (I): 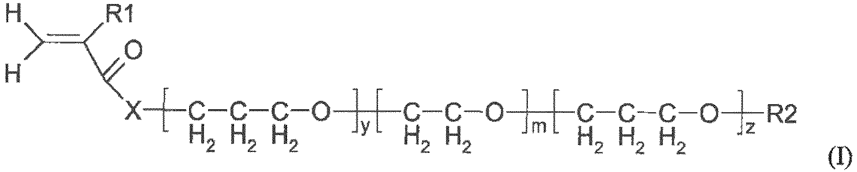 worin
R1 = H oder CH₃
R2 = Alkylkette mit mindestens 16 Kohlenstoffatomen
X = O, m ≥ 5, y = z = 0 oder
X = NH, m ≥ z ≥ 5, y = 0 oder
X = NH, m ≥ y ≥ 5, z = 0
- eines nichtionischen Monomers.

3. Weichmacherzusammensetzung nach Anspruch 1, ***dadurch gekennzeichnet, dass*** das hydrophobe Monomer ausgewählt ist aus der Gruppe, umfassend: ethoxyliertes Cetylmethacrylat (EO 25), ethoxyliertes Behenylmethacrylat (EO 25) oder ein Gemisch dieser Verbindungen.

4. Weichmacherzusammensetzung nach Anspruch 1, ***dadurch gekennzeichnet, dass*** das hydrophobe Monomer ethoxyliertes Behenylmethacrylat (EO 25) ist.

5. Weichmacherzusammensetzung nach Anspruch 1, ***dadurch gekennzeichnet, dass*** der Gehalt an hydrophobem Monomer bezogen auf das Gewicht des kationischen Polymers zwischen 0,1 Massen-% und 20 Massen-%, vorzugsweise zwischen 0,5 Massen-% und 5 Massen-%, ausmacht.

6. Weichmacherzusammensetzung nach Anspruch 1, ***dadurch gekennzeichnet, dass*** das kationische Monomer ausgewählt ist aus der Gruppe, umfassend die Salze von Diallyldialkylammonium, wie Diallyldimethylammoniumchlorid (DADMAC); die angesäuerten oder quarternisierten Salze von Dialkylaminoalkylacrylaten und -methacrylaten, insbesondere von Dialkylaminoethylacrylat (DAEA) und von Dialkylaminoethylmethacrylat (DAEM); die angesäuerten oder quarternisierten Salze von Dialkylaminoalkylacrylamiden oder -methacrylamiden, wie beispielsweise Methacrylamidopropyltrimethylammoniumchlorid (MAPTAC), Acrylamidopropyltrimethylammoniumchlorid (APTAC) und Mannichprodukte, wie die quarternisierten Dialkylaminomethylacrylamide.

7. Weichmacherzusammensetzung nach Anspruch 1, ***dadurch gekennzeichnet, dass*** der Gehalt an kationischem Monomer bezogen auf das Gewicht des kationischen Polymers zwischen 25 Massen-% und 99,9 Massen-%, vorzugsweise zwischen 50 Massen-% und 99,5 Massen-%, ausmacht.

8. Weichmacherzusammensetzung nach Anspruch 1, ***dadurch gekennzeichnet, dass*** das kationische Polymer in Gegenwart eines Vernetzungsmittels vernetzt wird, ausgewählt aus der Gruppe, umfassend Methylenbisacrylamid (MBA), Ethylenglykoldiacrylat, Polyethylenglykoldimethacrylat, Diacrylamid, Cyanomethylacrylat, Vinyloxyethylacrylat oder -methacrylat, Triallylamin, Formaldehyd, Glyoxal, glycidyletherartige Verbindungen wie Ethylenglykoldiglycidylether, Epoxies oder ein Gemisch dieser Verbindungen.

9. Weichmacherzusammensetzung nach Anspruch 8, ***dadurch gekennzeichnet, dass*** das kationische Polymer vernetzt wird in Gegenwart eines Übertragungsmittels, ausgewählt aus der Gruppe, umfassend Isopropylalkohol, Natriumhypophosphit, Mercaptoethanol oder einem Gemisch dieser Verbindungen.

10. Weichmacherzusammensetzung nach Anspruch 1, ***dadurch gekennzeichnet, dass*** das kationische Polymer durch inverse Emulsionspolymerisation erhalten wird.

11. Weichmacherzusammensetzung nach Anspruch 1, ***dadurch gekennzeichnet, dass*** das kationische Polymer in der Form einer inversen Emulsion vorliegt, umfassend eine ölige Phase, eine wässrige Phase, mindestens einen Emulgator des Wasser-in-Öl-Typs (W/O), mindestens einen Emulgator des Öl-in-Wasser-Typs (O/W) und von 20 Gew.-% bis 60 Gew.-%, vorzugsweise von 40 Gew.-% bis 55 Gew.-%, des kationischen Polymers.

12. Weichmacherzusammensetzung nach Anspruch 1, ***dadurch gekennzeichnet, dass*** das kationische Polymer durch Polymerisation von Folgendem erhalten wird:
- chlormethyliertem Dimethylaminoethylmethacrylat,
- Acrylamid; und
- ethoxyliertem Behenylmethacrylat (EO 25).

13. Weichmacherzusammensetzung nach Anspruch 1, ***dadurch gekennzeichnet, dass*** das kationische Polymer durch Polymerisation von Folgendem erhalten wird:
- chlormethyliertem Dimethylaminoethylmethacrylat,
- Acrylamid; und
- ethoxyliertem Cetylmethacrylat (EO 25).

14. Weichmacherzusammensetzung nach Anspruch 1, ***dadurch gekennzeichnet, dass*** der Gehalt an Verdickungsmittel bezogen auf das Gewicht des kationischen Polymers 0,05 % bis 10 %, vorzugsweise 0,1 % bis 5 %, ausmacht.

15. Verwendung einer Weichmacherzusammensetzung, enthaltend einen in Wasser unlöslichen kationischen Weichmacher, ausgestattet mit einem hydrophilen Teil und einem hydrophoben Teil eines kationischen Terpolymers, das durch Polymerisation des Folgenden erhalten wird:
- eines kationischen Monomers;
- eines Monomers mit hydrophobem Charakter der Formel (I); 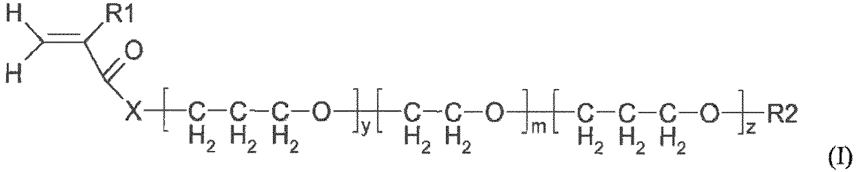 worin
R1 = H oder CH₃
R2 = Alkylkette mit mindestens 16 Kohlenstoffatomen
X = O, m ≥ 5, y = z = 0 oder
X = NH, m ≥ z ≥ 5, y = 0 oder
X = NH, m ≥ y ≥ 5, z = 0
- eines nichtionischen Monomers.

## Claims

1. Softening composition for laundry comprising:
- at least a cationic softener non water soluble having a hydrophilic part and a hydrophobic part; and
- at least a thickener containing a cationic terpolymer obtained by polymerization:
- of a cationic monomer;
- of a monomer with a hydrophobic nature, of formula (I): 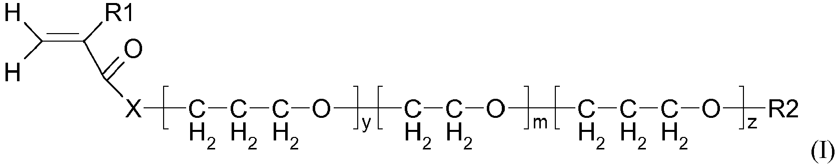 wherein
R1 = H or CH₃
R2 = alkyl chain having at least 16 carbon atoms
X = O, m ≥ 5, y = z = 0, or
X = NH, m ≥ z ≥ 5, y = 0, or
X = NH, m ≥ y ≥ 5, z = 0;
- of a nonionic monomer.

2. Softening composition according to Claim 1, ***characterized* in that** the thickener consists of a cationic terpolymer obtained by polymerization:
- of a cationic monomer;
- of a monomer with a hydrophobic nature, of formula (I): 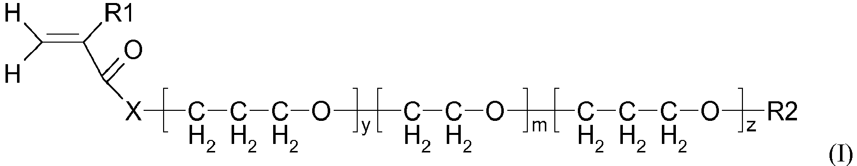 wherein
R1 = H or CH₃
R2 = alkyl chain having at least 16 carbon atoms
X = O, m ≥ 5, y = z = 0, or
X = NH, m ≥ z ≥ 5, y = 0, or
X = NH, m ≥ y ≥ 5, z = 0;
- of a nonionic monomer.

3. Softening composition according to Claim 1, ***characterized* in that** the hydrophobic monomer is chosen from the group comprising: ethoxylated cetyl methacrylate (EO 25), ethoxylated behenyl methacrylate (EO 25) or a mixture of these compounds.

4. Softening composition according to Claim 1, ***characterized* in that** the hydrophobic monomer is ethoxylated behenyl methacrylate (EO 25).

5. Softening composition according to Claim 1, ***characterized* in that** the content of hydrophobic monomer represents between 0.1% by weight and 20% by weight relative to the weight of the cationic polymer, preferably between 0.5% by weight and 5% by weight.

6. Softening composition according to Claim 1, ***characterized* in that** the cationic monomer is chosen from the group comprising diallyldialkylammonium salts, such as diallyldimethylammonium chloride (DADMAC); acidified or quaternized salts of dialkylaminoalkyl acrylates and methacrylates, in particular of dialkylaminoethyl acrylate (ADAME) and of dialkylaminoethyl methacrylate (MADAME); acidified or quaternized salts of dialkyl- aminoalkylacrylamides or methacrylamides, such as, for example, methacrylamidopropyltrimethylammonium chloride (MAPTAC), acrylamidopropyltrimethylammonium chloride (APTAC) and the Mannich products, such as quaternized dialkylaminomethylacrylamides.

7. Softening composition according to Claim 1, ***characterized* in that** the content of cationic monomer represents between 25% by weight and 99.9% by weight relative to the weight of the cationic polymer, preferably between 50% by weight and 99.5% by weight.

8. Softening composition according to Claim 1, ***characterized* in that** the cationic polymer is crosslinked in the presence of a crosslinking agent chosen from the group comprising methylenebisacrylamide (MBA), ethylene glycol diacrylate, polyethylene glycol dimethacrylate, diacrylamide, cyanomethyl acrylate, vinyloxyethyl acrylate or methacrylate, triallylamine, formaldehyde, glyoxal, compounds of glycidyl ether type, such as ethylene glycol diglycidyl ether, epoxies, or a mixture of these compounds.

9. Softening composition according to Claim 8, ***characterized* in that** the cationic polymer is crosslinked in the presence of a transfer agent chosen from the group comprising isopropyl alcohol, sodium hypophosphite, mercaptoethanol or a mixture of these compounds.

10. Softening composition according to Claim 1, ***characterized* in that** the cationic polymer is obtained by inverse emulsion polymerization.

11. Softening composition according to Claim 1, ***characterized* in that** the cationic polymer is in the form of an inverse emulsion comprising an oily phase, an aqueous phase, at least one water-in-oil (W/O) emulsifier, at least one oil-in-water (O/W) emulsifier and from 20% to 60% by weight, and preferably from 40% to 55% by weight, of said cationic polymer.

12. Softening composition according to Claim 1, ***characterized* in that** the cationic polymer is obtained by polymerization:
- of chloromethylated dimethylaminoethyl methacrylate;
- of acrylamide; and
- of ethoxylated behenyl methacrylate (EO 25).

13. Softening composition according to Claim 1, ***characterized* in that** the cationic polymer is obtained by polymerization:
- of chloromethylated dimethylaminoethyl methacrylate;
- of acrylamide; and
- of ethoxylated cetyl methacrylate (EO 25).

14. Softening composition according to Claim 1, ***characterized* in that** the content of thickener represents 0.05% to 10% relative to the weight of the softening composition, preferably 0.1 to 5%.

15. Use in a softening composition containing a cationic softener non water soluble having a hydrophilic part and a hydrophobic part, of the terpolymer obtained by polymerization:
- of a cationic monomer;
- of a monomer with a hydrophobic nature, of formula (I): 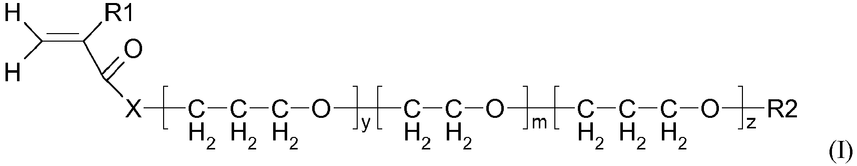 wherein
R1 = H or CH₃
R2 = alkyl chain having at least 16 carbon atoms
X = O, m ≥ 5, y = z = 0, or
X = NH, m ≥ z ≥ 5, y = 0, or
X = NH, m≥ y ≥ 5, z = 0;
- of a nonionic monomer.
